(19) **Europäisches Patentamt**

**European Patent Office**

**Office européen des brevets**

(11) **EP 0 885 848 A1**

(12) **EUROPEAN PATENT APPLICATION**
published in accordance with Art. 158(3) EPC

(43) Date of publication:
23.12.1998 Bulletin 1998/52

(21) Application number: 97933933.0

(22) Date of filing: 18.07.1997

(51) Int. Cl.$^6$: **C02F 1/46**, C25B 9/04

(86) International application number:
PCT/RU97/00228

(87) International publication number:
WO 98/27012 (25.06.1998 Gazette 1998/25)

(84) Designated Contracting States:
BE CH ES GB IE LI

(30) Priority: 14.12.1996 RU 96123170

(71) Applicant:
**Western Pacific Company Inc**
**Moscow 127247 (RU)**

(72) Inventors:
• **NAIDA, Nikolai Nikolaevich**
**Moscow, 105275 (RU)**
• **PUSHNYAKOV, Nikolai Karpovich**
**St.Petersburg, 193076 (RU)**

(74) Representative:
**Johnstone, Douglas Ian et al**
**Baron & Warren,**
**18 South End**
**Kensington, London W8 5BU (GB)**

(54) **METHOD FOR THE ELECTRO-CHEMICAL TREATMENT OF AQUEOUS SOLUTIONS AND DEVICE FOR REALISING THE SAME**

(57) The present invention pertains to the field of water processing and more precisely to that of water purification using electrical power. This invention relates to a method for the electro-chemical treatment of aqueous solutions as well as to a device for realising the same. The present invention may be used for improving the cost-performance ratio of electrolysers and comprises simplifying their power supply systems and reducing the energy loss therein. The power supply device of the electrolysers comprises a capacitive power-dosing unit, a depolarising current circuit as well as an alternative current power supply. These elements are used for feeding DC pulses through the electrolysers and the constant component of the current is modified according to the formula $I_O = 4fC(U_M - U_O/K)$, wherein f is the modification frequency in Hz of the current from the AC power supply, C is the capacitance of the capacitor in $\mu F$, $U_M$ is the amplitude value of the power supply voltage in V, $U_O$ is the constant component of the voltage drop in the electrolyser in V and K is equal to 1, 2, etc. and represents the coefficient between the transmission and the voltage of the current pulse generator.

**EP 0 885 848 A1**

**Description**

The invention falls into the field of chemistry and metallurgy, namely of the methods of water and water solutions processing with electric energy, so as of the electrolyzers poker suppliers. It can also be used in other fields of techniques applying electric current to produce pure materials out of electrolyte solutions (electrical metallurgy, galvanization etc.) and electrochemically process it.

Nowadays are well known and widely used the methods of electrochemical processing (ECHP) with continuous and pulse, i.e. impulse current (including periodically changed polarity of electrodes in the electrolyzer) so as overlaying magnetic field over the processes in electrolyzer. Energy-saving magnetic field overlay technologies of water solutions purification use polygradient magnetic field with intensity of 0.07 ... 0.8 T under intensity gradient of 0.1 ... 1.5 T/cm (1). In the installations realizing such technologies electrodes are connected to different poles of magnets, where the magnets have the form of ferrite plates or quadrates (1). It is also known an energy-saving method to purify wastewater periodically changing polarity of electrodes. The technology includes alternative current with frequency of 45 ... 50 Hz, average density of retrace impulse whereof is equal to 0.05 ... 0.4 of the main impulse density (2). Main impulses provide for realization in electrolyzer of the electrochemical processes demanded provoke polarization of its electrochemical system (ECHS), while retrace impulses, depolarizing the ECHS, allow reduction of expenses of water processing. It is known a method of electrochemical processing of water solutions using energy of forward and retrace impulses transmitted from the source of variable voltage of low, including industrial frequency where the ratio of quantity of electricity of these impulses is dozed. Cyclic changes of electrodes polarity in the installation, i.e. alternation of forward and retrace current provide for ECHS depolarization in the installations and reduce precipitation on the electrodes (3). It is known a power supplier of electrolyzer which has two inputs connecting it to the source of variable voltage via transformer or directly; two outputs connecting it to the positive and negative electrodes of electrolyzer; two valves forming series-matching circuit, the cathode of one valve whereof connected to the positive electrode, and the free anode of the other valve of the circuit connected to the negative electrode of the electrolyzer, while the point of joining of both valves outputs is connected to one input via current-limiting circuit breaker-feeder of the source energy (4) (Fig. 5). This simplified figure does not show filter with activated carbon, tank of crude water, pump and other non-electrochemical elements of the installation. The disadvantage of this installation is comparatively complicated scheme of the forward impulses formation and comparatively large losses of power in the shaper due to the passage of the impulse current through two diode valves minimum, so as very small value of retrace current (equal to the loss of current in diodes). Besides, taking into account comparatively low values of the constant $U_O$ of voltage drop in the electrolyzer (some 20 ... 30 V), the efficiency of this installation receiving power from 220 V network is not more than 10%. It demands using step-down transformers in the power supply circuits (at the Fig. 5 the automatic transformer LATR is shown) that worsen technical and economical characteristics of the installation realizing the above mentioned method of processing water solutions.

The problem to be resolved with the invention is to simplify the technology and create conditions for automatization of technological electrolysis. Technical result is to improve technical and economical characteristics of electrolyzers simplifying their power supply scheme, reduce loss of energy, minimize deposits on the electrodes and decrease danger of overvoltage. In order to achieve it the invention declared proposes to form the mentioned forward and retrace current impulses overlaying variable component of the source current on the constant component of the current, where the ratio in the impulses is regulated by changing constant component of the current in accordance with the following law (using capacitance feeder of energy):

$$I_O = 4fC(U_M - U_O K) \qquad (1)$$

where f - frequency of current changes of the alternative voltage power supplier, Hz;

C - capacitance of condenser, mcF;
$U_M$ - amplitude value of voltage of the source, V;
$U_O$ - constant component of the voltage drop at the electrolyzer, V;
K - coefficient of transition of the current impulses feeder (K = 1; 2;...)

In the installation a condenser is used as the current-limiting circuit breaker-feeder of the variable voltage source of power, and the installation has another condenser and threshold element (stabilithrone or thyristor), where another input is connected with the negative output of the installation directly and via threshold element - with the positive output and one plate of the second condenser, the other plate thereof connected with the joining point of the input with the current-limiting circuit breaker-feeder of the mentioned source. Figures 1-4 show four variants of power supply scheme of the electrolyzer realizing the proposed method of water solutions' ECHP. The installation shown on the scheme 1 has two inputs 1 and 2 to connect with the source of variable voltage electric power source 3 via transformer or directly, two outputs 4 and 5 to connect with the positive or the negative electrodes of the electrolyzer 4 correspondingly, four valves-diodes 7-10 connected as electrical bridge 11. Contacts of the input diagonal of the bridge are connected with inputs 2 and 1 via the current-limiting circuit breaker-energy feeder 12 of the source, while the inputs 2 and 1 are electrically connected with the outputs 5 and 4 of the electrolyzer electrodes via current-limiting circuit breakers - depolarizes 13 and 14 respectively. Since using active resistor as a current-limiting circuit breaker-feeder the losses of power in it decrease its efficiency and energetic characteristics, it is expedient to use so called reactive resistor as a current-limiting circuit breaker-feeder of energy, where losses are inverse proportional to its electrical merit. As the power throttles hake comparatively low merit (12 ... 20) and prolong current impulses if connected continuously with the source, it is expedient to use condensers shortening the current impulses and having comparatively high (100 ... 250) merit as current-limiting circuit breakers-feeders. Because of the high merit of condensers it is expedient to use it as depolarizing resistors 13 and 14, forming the circuit of continuous current flow by 1-14-4-6-5-13-2-3 circuit and back. Let us analyze the functioning of the installation described realizing the declared method of water solution ECHP in electrolyzer. Since it is necessary to pass forward and retrace impulses via electrolyzer 6 during ECHP of water solutions, we shall show how these impulses are formed in the installations according to the schemes 1-4. As it was mentioned above, we use condenser as current-limiting circuit breaker-feeder of energy 12 (Fig. 1) and condensers are also used as depolarizing resisters 13 and 14. Since the formation of impulses is carried out b overlaying the variable component of the current on the constant component, and the quantity of electricity in retrace impulses is considerable less than the quantity in the forward impulses, then the resistance of condensers 13 and 14 shall be much stronger than that of the condenser 12, i.e. the capacitance of the current-limiting circuit breaker-feeder of energy is larger than the capacitance of depolarizing condensers (DC) 13 and 14. When the source 3 is connected to the inputs 1 and 2 the energy of the source passes to the electrolyzer 6 by two ways: through current-limiting circuit breaker-feeder of energy condenser 12 and DC 13 and 14. Due to the presence of rectifier 11 diodes characterized by considerable non-linear characteristics in the scheme of the current-limiting circuit breaker-feeder of energy (CCBF), the processes in the system in the whole become non-linear, but the processes in the circuit with depolarizing condensers are smooth and the current in the circuit is proportional to the source 3 voltage and inversely proportional to the resistance of condensers 13 and 14. Average value of current of half-period (constant component of the half period) makes about 63.7% of its amplitude value, while average value of the period is equal to zero, i.e. the circuit with DC does not let pass the constant component of the source current. In spite of considerably non-linear character of the processes in the circuit with rectifier, we found out that angle duration of the forward impulses is less than 180 electric grades and it decreases along with the growth of relative value of the constant component of voltage drop $U_O^*$ (i.e. relation of the voltage drop in electrolyzer to amplitude value of the source voltage $U_O^* = U_O/U_M$) tending to one, since the impulse of current is over in the moment when the source voltage reaches its amplitude value. But the constant component of current in electrolyzer is defined by formula:

$$I_O = 4fC(U_M - U_O) \qquad (2)$$

where C - capacitance of CCBF (condenser 12).

The impulses of this current (which is positive straight) passing by the circuit 3-1-10-4-6-5-7-12-2-3 in one, and by the circuit 3-2-12-8-4-6-5-9-1-3 in the other half-period of the source current changing, has an angle duration less than 180 electric grades overlaying the alternative current (the current changing in accordance with harmonic law) form in the electrolyzer forward and retrace impulses, the value of variable component whereof is proportional to the capacitance of condensers 13 and 14, and the constant component is proportional to the capacitance of the condenser 12. The power supplier becomes simpler and power losses decrease if it is constructed in accordance with the scheme Fig. 2. In this case the electrolyzer 6 with an even number of cells is provided with a contact of its middle point by power supply connected with the input 2, and the diodes 7 and 8 are connected by half-bridge scheme. Such connection of two cells (sections) of electrolyzer 6 with the source, valve and condensers permits twice reduction of losses in the rectifiers' valves, since the two separated alternative currents in these cells passing by the circuit 3-1-14-4-6-2-3 (and back) and the circuit 3-2-6-5-6-2-3 (and back) are overlaid by forward impulses formed in the circuits 3-1-12-8-4-6-2-3 and 3-2-6-5-7-12-1-3 correspondingly. Here the forward current passes through one diode 8(7) only and the losses are twice as little as in the bridge rectifiers in the schemes by Fig. 1 and Fig. 5. The current $I_O$ in this installation is also defined by formula (2) but this current passes in turn two cells i.e. two sections, each of them may consist of several cells of electrolyzer and the current in the section is twice as little as the general load like electrolyzer in the scheme Fig. 1. But it should be noted that supplying power to bisection electrolyzer the constant component of the voltage drop at the section is twice as little as the voltage drop at both section of the electrolyzer, that is why the current defined by formula (2) increases. It allows decreasing the condenser 1 capacitance comparing it to its capacitance by scheme Fig. 1. But in order to realize this installation the even number of cells is necessary, and the electrolyzer shall have electric connection with the middle point, which is not always possible. The mentioned shortcoming reduces the field of application of this installation In the declared installation (Fig. 3) two inputs 1 and 2 are connected via transformer or directly to the source of variable voltage 3, where the frequency of the power is low, including industrial, two outputs 4 and 5 are connected to the positive and negative electrodes of electrolyzer 6 respectively. Two valves - diodes 7 and 8 form series-matching circuit, where cathode of the diode 8 is connected with positive 4, and anode of the diode 7 is connected with the negative 5 electrodes. The joint point of both valves 7 and 8 is connected with the input 2 via the current-limiting circuit breaker-feeder of energy 12, and the input 1 is connected to the negative output 5 directly and via threshold defense element 15 - with the positive output 4 and condenser plate 14. The other condenser plate is connected with the input 2 - the point of connection of this contact with the current-limiting circuit breaker-feeder of energy-condenser 12.

Figure 1 presents the scheme of power supplier with the current-limiting circuit breaker-feeder and the current-limiting circuit breakers-depolarizes with active resistors. Figure 2 presents the scheme of power supplier with reactive (capacitance) current-limiting circuit breaker-feeder and the current-limiting circuit breakers-depolarizes for electrolyzer with even number of cells. Figure 3 shows the scheme of power supplier with reactive (capacitance) current-limiting circuit breakers-feeders and the current-limiting circuit breaker-depolarizer. Figure 4 shows the scheme of two-cycle power supplier with increased constant component of the current. Figure 5 shows the scheme of prototype.

This installation functions as the following: under zero starting conditions contacts 1 and 2 receive power from the source 3. The half-period when input 1 receives positive and the input 2 - negative voltage we consider uneven (first, third etc), and the next half-periods - even (second, fourth etc). Let the capacitance of the condenser 12 be much more than the capacitance of the condenser 14. In the circuit containing this DC in even, uneven half-period the current goes by 3-1-5-6-4-14-2-3 channel from cathode to anode, which is considered reverse in electrolyzer. The value of this current is proportional to the voltage of the source and inversely proportional to the resistance of the condenser 14. During the even half-period the direction of the current in the electrolyzer is changed to reverse, i.e. we call the current forward flowing by the circuit 3-2-14-4-6-5-1-3. Change of capacitance of the condenser 14 will imperatively lead to changed alternative current in the analyzed circuit with electrolyzer i.e. changing the capacitance of the condenser 14, the quantity of electricity in the intervals of forward and reverse impulses of this alternative current is changed correspondingly. Besides the processes investigated, in this installation in the first half-period when the voltage increases from zero to maximum through diode 7 the current-limiting circuit breaker-condenser 12 is charged. As the result, there will be positive potential at its upper (scheme of the Fig. 3) plate, i.e. the voltage of this condenser (countercoming in relation to the voltage of the source 3) summed up with the voltage of the source 3 does not exceed the voltage drop of the diode 7 till the source voltage has not reached maximum. In this moment the charging of the condenser 12 will stop. Beginning with the moment in an uneven period when the voltage of the sources decreases (according to the law of cosine) by an absolute value, closed the diode 7, increases the voltage in the circuit: condenser 12 - source 3. Under zero conditions when the voltage at the electrolyzer 6 can be considered equal to zero in the first half-period the diode 8 is opened and a forward impulse goes by the circuit 3-2-12-8-4-6-5-1-3. The current changing in accordance with the sine law achieves its maximum value when the voltage of the source 3 is equal to zero and the condenser 12 is completely discharged. In the second and the following even half-periods the polarity of the source 3 will change to the opposite and the current will increase from zero till maximum, growing in accordance with the sine lay, and the current in the CCBF circuit will decrease by the lay, of cosine, and after 90 electrical grades the current will fall to zero, when the source current is maximal again. The condenser 12 in this moment of time with the positive potential on the lower according to Fig. 3 plate will charge up to the voltage equal to difference between the amplitude value of the source 3 voltage and voltage drop at the electrolyzer 6. The diode 8 then is closed. In the second half of the even half-period when voltage of the source 3 again decreases by the law of cosine, the diode 7 opens and the condenser 12 will again charge up until the source voltage in the following uneven (third etc) half-period does not reach its maximal amplitude value $U_M$. Then the processes of the constant component of the current impulse formation with CCBF-condenser 12 repeat cyclically. The constant component of the source current $I_O$ overlays the variable component of the current if through the electrolyzer 6 in every period of the source 3 voltage changing pass two impulses (forward and retrace) of alternative current and unipole (without negative component) forward impulse which is a constant component of the current $I_O$ defined by the equation:

$$I_O = 4fC(U_M - 0.5U_O) \qquad (3)$$

when relative value of the voltage drop at the electrolyzer $U_O^*$ is changed within the range from zero to 2 in the analyzed installation which doubles the voltage and because of that has the coefficient of impulse voltage transformation K = 2. Strictly speaking impulse of forward current is the impulse containing the sum of two impulses: forward impulse of alternative current and forward impulse of the constant component of the current. Since the reverse impulse created by alternative current carries out depolarization in electrolyzer and is aimed towards the forward impulse of alternative current, then the producing current in electrolyzer shall be estimated as by the constant component of the current in the electrolyzer. In order to reduce the danger of overvoltage at the electrolyzer 6 outputs (for instance, due to circuit break between outputs 4 and 5) a threshold element is connected to these outputs. It can be for example dinistor or thyristor, whose anodes are connected to the output 4, and the cathodes - to the output 5. The thyristor may he controlled with parallel connected high-ohm variable resistor slider contact thereof is connected through stabilithrone to the control electrode of thyristor. Under considerably small working currents in electrolyzer their defense can be realized with stabilithrone whose cathode is connected to the positive, and anode - to the negative electrodes of the electrolyzer. This stahilithrone is chosen by breakdown voltage higher than the value of the constant component of the voltage drop at electrolyzer, but not higher than the emergency limit. Such threshold element can be also introduced into the schemes Fig. 1, 2 and 4. If there is even number of cells in the electrolyzer and there is contact of its middle point the power supply of the latter may be realized by the scheme on the Fig. 4 which is the two-stroke variant of the Fig. 3 installation. In fact the source 3 through the diodes 7, 8 and condensers 12 and 14 provides power to the cells of the lower at the scheme block of electrolyzer 6, and through the diodes 17, 18 and condensers 112 and 114 (into numeration of the latter a 1 figure has been introduced not changing the order of these elements) - the cells of the upper block of the scheme next to the positive contact 4 of the electrolyzer 6. In this installation in one half-period the impulses of the constant component of the current pass through one, and in the second half-period - through the other block (section) of the electrolyzer. The condensers 12 and 112 are charged with displacement by phase of 180 electrical grades, while the condensers 14 and 114 conduct the electric current in the corresponding blocks of the electrolyzer. It is necessary to take into account the above mentioned fact of increasing the constant component of current in two-stroke electrolyzer according to Figure 4 comparing with the installation of Figure 3 due to the two times decrease of the constant component of the voltage drop at the electrolyzer section, that according to the formula (3) increases the constant component of the current in the electrolyzer or allows decreasing of the condenser 12 capacitance. Choosing the capacitance of DC (13, 14 fig 2) we determine the value of variable component of current in the electrolyzer. Overlaying the variable component of the current with the constant component of the current in the electrolyzer which value is regulated in accordance with the law defined (formula (1)) permits to form forward and retrace impulses in the water solutions with the necessary quantity of electricity in these impulses, i.e. effectuate electrochemical processing of solutions using sign-changing current at the wanted ratio of forward and retrace impulses. It can be proved that using capacitance energy feeder in devices-feeders of current impulses with large values of voltage transformation coefficient (K = 3 : 4 etc) the values of the constant component of the voltage drop in electrolyzer (or in its sections) decreases, increasing the value of the constant component of the current under constant value of the CCBF capacitance. It allows choosing according to the formula (1) correspondingly smaller values of the condenser 12 capacitance in the installations shown on Fig. 1-3, or of the condenser 112 in the scheme shown on Fig. 4. Formation of forward and retrace impulses in the installations is realized by highly merited reactive elements-condensers. Losses of power are in that case minimal and losses in the rectificators are reduced two times at least. Hence, the use of the variants of energy-saving installations according to the schemes Fig. 1-4 allows realizing of the ECHP of water solutions with the wanted ratio of quantity of electricity in forward and retrace impulses, following any, including industrial frequency, i.e. realizing the declared method of ECHP of water solutions. So, applying the method of electrochemical processing of water solutions using the energy of forward and retrace impulses supplied by source of variable voltage of low, including industrial frequency, in order to regulate the ratio of quantity of electricity in these impulses the mentioned impulses are produced by overlaying variable component of the source current on the constant component of the current, and the regulation of the ratio in the impulses is realized by changing the constant component in accordance with the declared law, and the technical and economical characteristics of electrolyzers are improved. Besides, if in a power supplier of electrolyzer which has two inputs connecting it to the positive and negative inputs of electrolyzer, two valves forming series-matching circuit, the cathode of one valve whereof connected to the positive electrode, and the free anode of the other valve of the circuit connected to the negative electrode of the electrolyzer, while the point of joining of both valves outputs is connected to one input via current-limiting circuit breaker-feeder of the source energy, as a current-limiting circuit breaker-feeder of the source energy a condenser is used, and the installation has second condenser and a threshold element, the other input been connected to the negative output directly, and via the threshold element with the positive output and one condenser plate, the other plate thereof is connected to the joint point of the input with the current-limiting circuit breaker-feeder of the mentioned source energy, the losses of power in this installation are reduced, and the destruction of the electrodes cover is prevented. Besides, the deposits on electrodes and diaphragms of the electrolyzer are also prevented or slowed up. All this improves technical and economical characteristics of systems of electrochemical processing of water solutions. Experimental researches of the electrolyzer supplied by the installations constructed in accordance with the schemes shown on Fig. 2 and 3 proved its high efficiency and possibility to achieve the technical result of the invention.

The method of electrochemical processing of water solutions and the installation realizing it are used in galvanic industrial installations and in installations of electrochemical gas production, so as to produce disinfecting and cleaning solutions, in biotechnology to correct pH of the environment and in preparation of water.

REFERENCES CITED

1. SU, Inventor's certificate № 903302, C02 F 1/ 46, 1980.
2. SU, Inventor's certificate № 929582, CO2 F 1/ 46, 1980.
3. A.A. Gromoglasov et al. Water treatment processes and eguipment. Energoizdat, 1990, 198 p.
4. V.D. Grebenyuk. Electrodialysis, Kiev, Tekhnika, 1976, 126 p.

**Claims**

1. A method of electrochemical treatment of water solutions using energy of pulses of forward and reverse current to be supplied by a source of ac voltage of low including industrial freguency, with dosed electric charge ratio of the pulses, wherein the said pulses are formed by superposition of the alternating component of the current on the constant component of the current, the dosed ratio in the pulses is controlled by varying the constant component of the current according to the formula:

$$Io = 4 f C ( Um - Uo / K ),$$

where with a capacitive power-dosing unit in use

f- modification frequency of the ac voltage source, Hz;
C - capacitor capacitance, $\mu$F;
Um - amplitude value of the voltage source, V;
Uo - constant component of the voltage drop in the electrolizer, V;
K - voltage transfer ratio of the current pulse generator ( K = 1, 2,...).

2. A device to feed power to the electrolyzer according to the method of claim 1, comprising two inputs connecting the said device to the ac voltage source through a transformer or directly, two outputs connecting the said device to positive and negative outputs of the electrolyzer, two valves forming a series - matching curcuit, while the cathode of one valve is connected to the positive output, the free anode of the other valve of the said circuit is connected to the negative outputs of the said electrolyzer, and the joint point of both valves outputs is connected to one input through a current limiter - power-dosing unit of the voltage source, wherein as a current limiter - power - dosing unit for the voltage source a capacitor is used ad the device is equipped with a second capacitor and a threshold element, the other input of the said device being connected to the negative output directly and through the threshold element to the positive output and one plate of the second capacitor, the other plate of the said capacitor being connected with the joint point of the input and the current limiter - power - dosing unit of the said voltage source.

## INTERNATIONAL SEARCH REPORT

| International application No. |
| --- |
| PCT/RU 97/00228 |

**A. CLASSIFICATION OF SUBJECT MATTER**

IPC$^6$ CO2F 1/46, C25B 9/04

According to International Patent Classification (IPC) or to both national classification and IPC

**B. FIELDS SEARCHED**

Minimum documentation searched (classification system followed by classification symbols)

IPC$^6$ CO2F 1/46, C25B 9/04, C25D 17/00, 19/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | SU 850600 A (VSESOJUZNY NAUCHNO-ISSLEDOVATELSKZ INSTITUT VODOSNABZHENYA, KANALIZATSII GIDROTEKHNICHESKIKH SOORUZHENY I INZHENERNOI GIDROGEOLOGII) 30 July 1981 (30.07.81) | 1,2 |
| A | SU 1214599 A (A.S. GAIDUCHENKO et al) 28 February 1986 (28.02.86) | 1 |
| A | SU 1271828 A1 (VSESOJUZNY NAUCHNO-ISSLEDOVATELSKY INSTITUT PO OKHRANE VOD) 23 November 1986 (23.11.86) | 1 |
| A | US 3954592 A (BEESTON COMPANY LIMITED) 4 May 1976 (04.05.76) | 1,2 |
| A | US 4798661 A (STANLEY A. MEYER) 17 January 1989 (17.01.89) | 1,2 |
| A | EP 0286233 A2 (OMCO CO. LTD) 12 October 1988 (12.10.88) | 1,2 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 29 October 1997 (29.10.97) | 13 November 1997 (13.11.97) |

| Name and mailing address of the ISA/ | Authorized officer |
| --- | --- |
| RU | |
| Facsimile No. | Telephone No. |

Form PCT/ISA/210 (second sheet) (July 1992)